(19) Europäisches Patentamt
European Patent Office
Office européen des brevets

(11) Publication number: **0 378 450 B1**

(12) # EUROPEAN PATENT SPECIFICATION

(45) Date of publication of patent specification :
06.11.91 Bulletin 91/45

(51) Int. Cl.⁵ : **H04M 1/72, H04Q 7/04, H04B 7/26**

(21) Application number : **90300493.5**

(22) Date of filing : **17.01.90**

(54) Radio telephone system.

Divisional application 90202286.2 filed on 17/01/90.

(30) Priority : **17.03.89 GB 8906218**

(43) Date of publication of application :
**18.07.90 Bulletin 90/29**

(45) Publication of the grant of the patent :
**06.11.91 Bulletin 91/45**

(84) Designated Contracting States :
**DE DK FR GB SE**

(56) References cited :
**EP-A- 0 047 524
EP-A- 0 287 061
EP-A- 0 310 876
WO-A-85/02738
FR-A- 2 613 562
US-A- 4 680 787**

(73) Proprietor : **TECHNOPHONE LIMITED
Ashwood House Pembroke Broadway
Camberley Surrey GU15 3SP (GB)**

(72) Inventor : **Grimmett, Alan Charles
9 Kingfisher Drive, Merrow Park
Guildford GU4 7EA, Surrey (GB)**
Inventor : **Martensson, Nils Erik
Long Acre, Hook Heath Gardens
Woking GU22 0QG, Surrey (GB)**
Inventor : **O'Neill, Simon Philip
34 Stratfield, Woodenhill
Bracknell RG12 4WT, Berks (GB)**
Inventor : **Wilkins, Roger
Armdale, Chineham Lane, Sherborne St John
Basingstoke RG24 9LR, Hants (GB)**

(74) Representative : **Frain, Timothy John
Technophone Limited Intellectual Property
Manager Ashwood House Pembroke
Broadway
Camberley, Surrey GU15 3SP (GB)**

## Description

This invention relates to a radio telephone system, particularly but not exclusively a cellular radio telephone system, comprising a host telephone and handset means containing a number assignment module (NAM) in which is stored a unique telephone number.

By way of background explanation, the cellular radio telephone system divides a geographical area into a plurality of adjoining cells each including a stationary transmitting and receiving base station connected to the conventional fixed-wire telephone network. Each cell is designed to allow a cellular telephone within the cell to access the fixed-wire network, and vice versa. Hence, the particular cell which receives the transmitting and/or receiving signal of a cellular telephone is the cell which is made operative for transmitting and/or receiving the call. So, for example, when a cellular telephone user attempts to make a call, the cell whose base station receives the strongest signal will be the one which effects the connection for that call. If the cellular telephone then moves beyond the effective range of the cell originally handling the call, another cell which receives the signal more strongly will become operative by an automatic transfer or 'hand-over' system. Hand-over may occur many times during a call depending on the distance travelled by the telephone and the number of effective cells through which the telephone passes.

Each cellular telephone includes a call-channel selector which controls a frequency synthesizer to span the available call-channel frequencies and, in combination with a microprocessor, selects the call-channel received most strongly, ie. from the cell base station closest to the telephone.

Cellular radio telephones fall into two main categories, namely mobiles and hand portables, although there is also an intermediate category known as transportables. As the name implies, a hand portable telephone is relatively lightweight and small in size and operates from an internal, rechargeable battery pack so that it may readily be carried around by the user. A mobile telephone, on the other hand, is permanently installed in a vehicle and operates from the vehicle's own (higher voltage) power supply. A mobile has the advantage over a hand portable that it can transmit at a higher power level, but a hand portable has the advantage that the user does not need to be in or near a vehicle to use the telephone, since it can be used anywhere within range of a base station. Unlike a mobile telephone, however, a hand portable does have the drawback of having a limited stand-by and call time before the internal battery pack needs to be recharged. Thus, mobiles and hand portables each have their own particular benefits, and it is not uncommon for a subscriber to have both types of telephone, each with its own unique identity, that is to say the mobile telephone would have one telephone number and the hand portable would have a different telephone number, each with its own billing account. Alternatively, a hand portable telephone may be used in the vehicle with a special booster unit operated from the vehicle's power supply, but this involves additional apparatus and more expense.

Conventionally, each cellular telephone — whether mobile or hand portable — has its own unique telephone number by which it may be accessed from other cellular telephones or fixed-wire conventional telephones. The full telephone number is stored in a memory, e.g. a ROM, PROM or RAM known in the art as a 'number assignment module' (NAM) coupled to the control circuits, usually a microprocessor, of the cellular telephone. In the case of mobile telephones the NAM is traditionally contained in the so-called transceiver unit located in a convenient (usually concealed) place separate and remote from the handset, the handset being connected to the transceiver unit.

It is noted that the terms 'number assignment module' and 'NAM' as used herein encompass any memory means, not necessarily modular in form, nor dedicated to the NAM function, in which information pertaining to the identity of the telephone, specifically the telephone number, is stored.

U.S. Patent No. 4,677,653 and U.S. Patent No. 4,734,928 disclose an adapter for a cellular mobile telephone which converts the telephone to have any one of several different telephone numbers selected manually by the user. The adapter is provided with a plurality of number assignment modules (i.e. NAMs) in the form of respective ROMs, each storing a unique telephone number. The ROMs (or NAMs) are mounted on a main circuit board in a housing separate from the telephone unit. Each NAM is connected to a multi-position switch so that a selected one of the NAMs may be coupled to the microprocessor of the telephone to change the telephone number. These U.S. Patents essentially extend the concept of a cellular telephone having its own unique telephone number by teaching that each telephone may indeed be adapted to have several unique numbers, any one of which may be active (all the others being dormant) at any one time and the user would have a different billing account for each number. Although the same principle could also be applied to hand portable telephones, the overriding doctrine remains to provide cellular telephones with exclusive telephone numbers, that is to say each telephone either has its own individual telephone number or a unique set of telephone numbers exclusive to that particular telephone.

In the neighbouring art of cordless radio telephones, British Patents Nos. 2,154,395 and 2,159,372 disclose an arrangement of handset and base unit, in which the base unit automatically generates and stores an identification code, and then transmits the same code to the handset over the air. The handset stores the code in memory. When an incoming or outgoing call is initiated, the two identification codes stored in the base unit and the handset, respectively, are compared and only if they match is the call allowed to proceed. The identification codes stored in the base unit and handset are thus provided for security purposes i.e. to prevent crosstalk and the risk of wire tapping in that they prevent a handset being used with any base unit other than its intended partner. Provision is made to enable a plurality of handsets to be operable with a common base unit, but each of the handsets can be used only with the particular base unit (or units) to which it is paired and no other. Moreover, in the case of cordless telephones it is noted that the base unit and the handset, although separate, constitute a single telephone and therefore only have one unique telephone number associated therewith. Furthermore, it is noted that this telephone number does not need to be stored in memory within any part of the telephone since the base unit is connected to the fixed-wire telephone network and hence can be addressed in the conventional manner. There is therefore no equivalent of a number assignment module in the case of a cordless telephone.

US-A-4,680,787 discloses a portable radio telephone which can be inserted into a passive vehicle-mounted converter coupled to a remote handset, enabling the portable telephone to share the vehicle's battery and antenna. The portable telephone may be operated from the remote handset.

EP-A-0,310,876, which is relevant only to the extent prescribed by Article 54 (3) and (4) EPC, discloses a mobile and portable radio telephone each having its own telephone number. The portable may be coupled to the mobile whereupon the telephone number of the portable is transferred to the mobile for subsequent communication.

According to a first aspect of the present invention there is provided a radio telephone system comprising host radio telephone means, handset means, and means for intercoupling the handset means and the host radio telephone means whereby information may be transferred therebetween, characterized in that the handset means is in the form of a portable radio telephone containing a number assignment module (NAM) adapted to store two or more telephone numbers identifying the portable radio telephone, the portable radio telephone has means providing access to said NAM from outside the portable radio telephone, and the host telephone means is provided with means for accessing said NAM in the portable radio telephone whereby the host telephone means becomes operable with at least one of the telephone numbers identifying the portable radio telephone when the portable radio telephone is coupled to the host telephone means.

In a radio telephone system in accordance with the invention the portable radio telephone lends its own inherent identity (telephone number(s)) to the host telephone means while the portable radio telephone is temporarily connected to the host. Hence, a common host may be used by any number of different subscribers having their own portable radio telephones and they will each be able to make and receive calls on their own personal telephone numbers and the charges for using the system can be levied to the respective subscriber's billing account. Conversely, an individual subscriber may connect his personal portable radio telephone to any convenient host telephone means and he will be able to make and receive calls on his personal telephone number and, furthermore, the charges for using the system can be levied to his particular billing account.

The host telephone means may contain its own NAM and so be fully operable as a telephone in its own right with its own unique telephone number(s). Nevertheless, whenever a portable radio telephone containing its own NAM in accordance with the invention is connected thereto, the host will automatically assume the telephone number of the portable radio telephone regardless of its own inherent number(s).

The hand portable may be provided with switching means which automatically disable at least some of the R.F. circuits of the hand portable telephone when it is connected to the host, since the host will have the identity of the hand portable and the hand portable telephone is itself otherwise redundant except for possible use as a handset.

The radio telephone system of the invention may suitably be a cellular system. The host telephone may be a mobile cellular telephone and the portable radio telephone may be a hand portable cellular telephone.

In a preferred embodiment the radio telephone system includes means capable of detecting the connection of the portable radio telephone to the host telephone, wherein the host telephone comprises control circuitry to which the NAM in the host is coupled, and switching means responsive to the detecting means which disconnect said NAM in the host from the control circuitry when the portable radio telephone is connected to the host telephone. The host thus behaves schizophrenically, resuming its own inherent telephone number when the portable radio telephone is disconnected, but assuming the identity of the portable radio telephone when the portable radio telephone is connected. Such a switching means is not, however, essential. Without it, the host telephone may operate with both telephone numbers simultaneously when the portable radio telephone is connected.

In one embodiment the host telephone may be arranged to read the NAM information directly from the portable radio telephone whenever the portable radio telephone is connected to the host. In an alternative embodiment, the host telephone comprises memory means for storing NAM information from the portable radio telephone, and means are provided for transferring information from the NAM of the portable radio telephone to the memory means automatically when the portable radio telephone is connected to the host.

Means may also be provided for erasing the information stored in the memory means automatically when the portable radio telephone is disconnected from the host. Fresh NAM information can thus be stored in the memory means the next time a portable radio telephone is connected to the host telephone. Additionally, the portable radio telephone may comprise memory means for storing variable information, such as abbreviated dialling codes or frequently used telephone numbers entered by the subscriber, and the host telephone may comprise a corresponding memory, means being provided to download information from the memory means in the portable radio telephone to the corresponding memory in the host telephone automatically when the portable radio telephone is connected to the host telephone. Similarly, information may be transferred from the host telephone to the portable radio telephone.

According to another aspect of the invention there is provided a host radio telephone for use in the radio telephone system in accordance with the first aspect, adapted to have removably coupled thereto a portable radio telephone containing a number assignment module (NAM) adapted to store two or more telephone numbers identifying the portable radio telephone, the host telephone having means for accessing the NAM whereby the host telephone becomes operable with at least one of the identifying telephone numbers of the portable radio telephone when the portable radio telephone is coupled to the host telephone. Additionally or alternatively, the host telephone may contain a NAM adapted to store two or more telephone numbers identifying the host telephone.

According to another aspect of the invention there is provided a portable radio telephone for use in the radio telephone system in accordance with the first aspect, adapted to be removably coupled to the host telephone and containing a number assignment module (NAM) adapted to store at least two telephone numbers identifying the portable radio telephone, the portable radio telephone being adapted to provide access to the NAM from outside the portable radio telephone.

Embodiments of the invention will now be described, by way of example, with reference to the accompanying drawings, in which :

    Figure 1 illustrates schematically a first embodiment of a cellular radio telephone system in accordance with the invention,

    Figure 2 illustrates schematically a different radio telephone system in accordance with European divisional application No. 90202286.2 (our Ref :

PAT 89002d EP),

    Figure 3 illustrates schematically a second embodiment of the invention, and

    Figure 4 illustrates schematically a further embodiment of the invention.

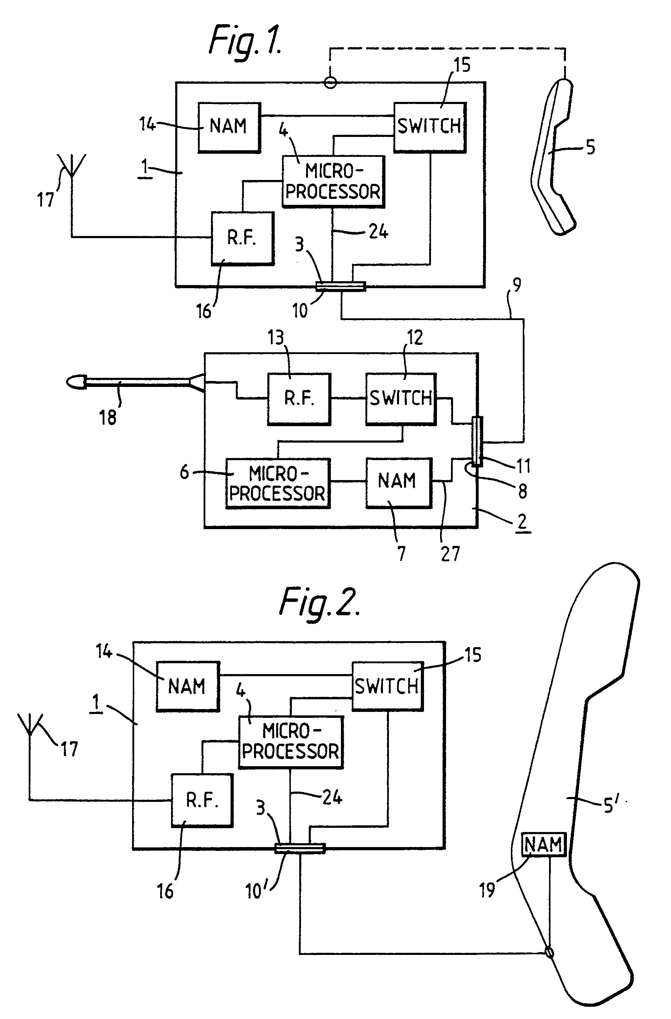

Referring to Figure 1, there is shown schematically a mobile cellular radio telephone 1 connected to a hand portable cellular radio telephone 2. As is conventional, the mobile telephone comprises a transceiver with R.F. circuits 16 connected to an external antenna 17 and coupled to a microprocessor 4. The mobile telephone has its own inherent telephone number by virtue of a NAM 14 contained within the main unit of the mobile telephone. A dedicated handset 5 is connected to the main unit in known manner. However, unlike conventional mobile apparatus, the present mobile telephone has an external connector 3, e.g. an 18 pin socket 3, known per se, coupled to the microprocessor 4 of the mobile telephone by an internal data link 24 and the NAM 14 is coupled to the microprocessor 4 via a switch 15 as explained in more detail below.

The hand portable telephone 2 comprises its own microprocessor 6 and a NAM 7 coupled thereto containing the telephone number of the hand portable unit. The NAM 7 is connected by an internal data link 27 to an external connector 8, e.g. an 18 pin socket, on the outer casing of the hand portable telephone 2.

The hand portable and mobile telephones are mutually connected by a wire (electrical) data link 9 having plugs 10 and 11 at opposite ends which mate with sockets 3 and 8 in the mobile and hand portable telephones respectively. A conventional logical switch 12 within the hand portable telephone 2 detects when connection is made to the mobile telephone 1 and disables the R.F. circuits 13 of the hand portable so that the hand portable ceases to operate as an independent radio telephone. When the telephones 1 and 2 are disconnected the switch 12 reconnects the R.F. circuits so that the hand portable telephone 2 resumes normal operation.

When the two telephones 1 and 2 are connected as shown in Figure 1, the NAM 7 of the hand portable telephone 2 is coupled via a fixed-wire electrical datalink 9, to the microprocessor 4 of the mobile telephone 1. The microprocessor 4 thus has direct access to the telephone number information stored in NAM 7. Also, the NAM 14 of the mobile telephone 1 is coupled to the microprocessor 4 via a conventional logical switch 15 which detects whether or not a hand portable telephone 2 is connected. When the hand portable is connected the switch 15 is opened to disconnect internal NAM 14 so that the microprocessor 4 only has access to the information in the NAM 7 of the hand portable telephone 2, but not to the NAM 14 of the mobile 1. The mobile thus assumes the identity of the hand portable telephone. When the hand portable is disconnected, however, the switch 15 is closed to couple the internal NAM 14 to the microprocessor 4 whereby the mobile resumes its own inherent telephone number.

The hand portable telephone 2 may be used as the handset for the mobile, in which case the audio circuits (not shown) remain operational when the telephones are connected, and this avoids the need for using the dedicated handset 5. However, the hand portable unit may be inconvenient and cumbersome to use as a handset inside a vehicle, because of its relatively heavy weight, fixed antenna, and trailing connector lead 9, in which case the dedicated handset 5, or a conventional so-called "hands-free" apparatus, permanently connected to the mobile unit 1, may be utilised. In this case the audio circuits of the hand portable telephone 2 may also be disabled when the two telephones are connected together.

Figure 2 shows a variant in accordance with our European divisional application No. 90202286.2 (our Ref : PAT 89002d EP) in which an ancillary handset 5' is removably connected to the mobile telephone 1 via a connector 10'. The handset 5' contains its own NAM 19 in which is stored an exclusive telephone number identifying the handset. Operationally this arrangement is analogous to the previous embodiment with the ancillary handset 5' taking the place of the hand portable telephone 2. Thus, when the handset 5' is connected, the mobile telephone 1 becomes operative with the telephone number in the handset NAM 19. In this case switch 15 is responsive to the connection of an ancillary handset, and disconnects NAM 14 when an ancillary handset 5' is connected.

In a modified version of the arrangements described above the NAM 14 and switch 15 within the mobile unit may be omitted, the microprocessor 4 simply having direct read access to the NAM 7 (or 19) in the handset 2 (or 5') whenever the handset is connected. The mobile unit 1 does not have a dedicated handset and can be regarded as a latent telephone in that it does not contain its own inherent identity and only becomes operable as a telephone when a handset containing its own NAM is connected thereto. This adds a new dimension of versatility to conventional mobile telephones since the same mobile unit can be used by any number of different subscribers equipped with appropriate NAM-containing handsets and the telephone as a whole assumes the identity of the particular handset which is connected for the duration of the connection.

It is noted that what is referred to herein as the mobile unit need not be contained within a single unitary housing. In particular the handset may be connected to a transceiver unit of the telephone via intermediate means, typically a cradle on which the handset is placed either when the telephone is not in use or when it is being used in a "handsfree" mode. The cradle is conventionally fixedly mounted within the passenger compartment of the vehicle for ready access to the handset, whilst the transceiver unit may be located in any convenient place within the vehicle, e.g. in the trunk or beneath one of the seats.

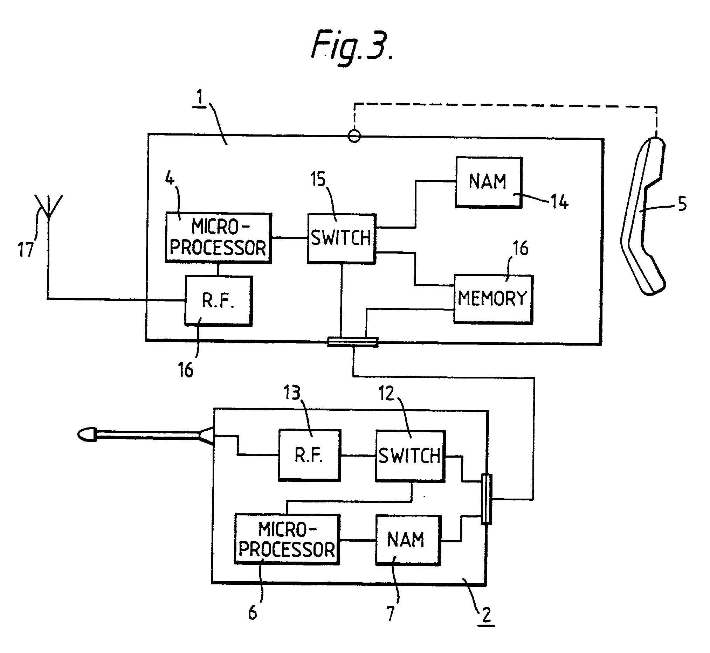

Figure 3 shows an arrangement in which the mobile telephone 1 also comprises a programmable memory 16 into which information from the NAM 7 in the hand portable telephone is downloaded automatically when the two telephones are connected together. In this case the microprocessor 4 is coupled to the memory 16 rather than directly to the NAM 7. The NAM 14 and memory 16 are coupled to the microprocessor 4 via a switch 15 which detects whether or not a hand portable telephone is connected. When a hand portable is connected, NAM 14 is isolated and memory 16 is coupled to microprocessor 4 so that the mobile telephone assumes the identity of the hand portable telephone 2. When the hand portable telephone is disconnected, memory 16 is isolated and NAM 14 is coupled to the microprocessor 4 so that the mobile telephone resumes its own inherent telephone number. Also, when the hand portable telephone is disconnected the memory 16 may be erased under the control of the microprocessor 4.

As a variation to the Figure 3 embodiment, the handportable telephone 2 may be substituted by an ancillary handset containing its own NAM as described with reference to the previous embodiments.

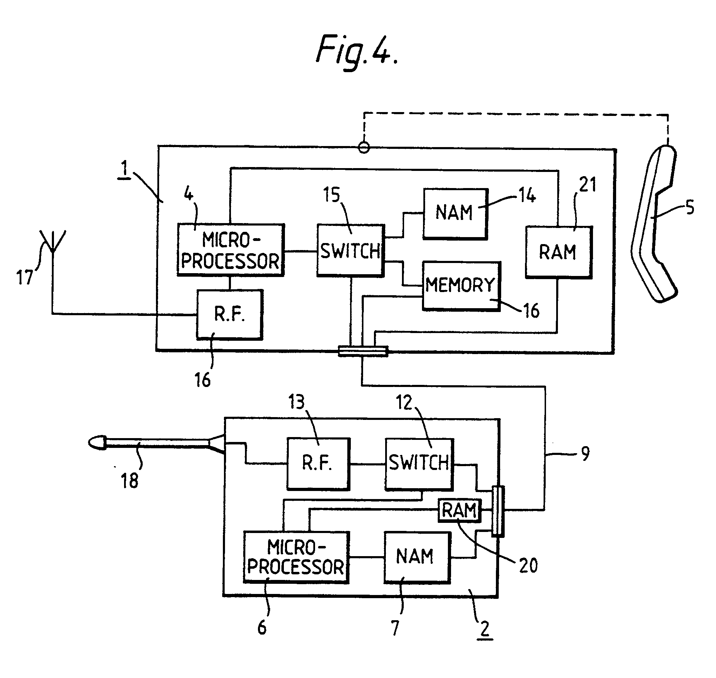

Figure 4 shows a modification of the arrangement in Figure 3 wherein the hand portable telephone 2 additionally has a random access memory or RAM 20 coupled to microprocessor 6 and the mobile telephone 1 has a corresponding RAM 21 coupled to microprocessor 4. Variable data may be entered into RAM 20 by the user, e.g. abbreviated dialling codes, frequently dialled telephone numbers, or other data. When the telephones 1 and 2 are connected together the data in RAM 20 is compared with data already held in RAM 21. Those memory locations which are not duplicated may be transferred automatically from RAM 20 to RAM 21 via data link 9 in known manner. Hence the mobile telephone 1 may take on not only the telephone number but other data stored in the hand portable telephone without rekeying.

In view of the foregoing description it will be evident that various modifications may be made within the scope of the present invention. For example, it is not necessary for the NAM 14 to be disconnected from the microprocessor 4 when a handportable telephone or ancillary handset is connected to the mobile, since both NAMs may remain coupled whereby the mobile telephone may simultaneously have two (or more) telephone numbers. In this case the switch 15 may be dispensed with. On the other hand the switch 15 need not itself be capable of detecting when an external device is connected to the mobile. Instead this function may be carried out by independent detection means well known to the person skilled in the art and the switch would then operate in response to the detection means, and switching may be effected under software control for example by the internal microprocessor. Furthermore, the NAMs in the telephones or the ancillary handset are not restricted to containing a single telephone number, but may contain several different numbers. As regards the data link between the two telephones this need not be a fixed-wire electrical link (as described), but may alternatively be an optical or radio data link.

Finally, it is noted that the invention is not limited to cellular radio telephone systems, but applies equally to any radio telephone system, for example the discrete area system known in the UK as CT2.

## Claims

1. A radio telephone system comprising host radio telephone means (1), handset means (2), and means (9, 10, 11) for intercoupling the handset means (2) and the host radio telephone means (1) whereby information may be transferred therebetween, characterized in that the handset means is in the form of a portable radio telephone (2) containing a number assignment module (NAM) (7) adapted to store two or more telephone numbers identifying the portable radio telephone, the portable radio telephone (2) has means (8, 27) providing access to said NAM (7) from outside the portable radio telephone, and the host radio telephone means (1) is provided with means (4, 24, 3) for accessing said NAM (7) in the portable radio telephone (2) whereby the host radio telephone means (1) becomes operable with at least one of the telephone numbers identifying the portable radio telephone when the portable radio telephone is coupled to the host radio telephone means.

2. A radio telephone system comprising a host radio telephone (1), handset means (2), and means (9, 10, 11) for intercoupling the handset means (2) and the host radio telephone (1) whereby information may be exchanged therebetween, characterized in that the host telephone means has a first number assignment module (NAM) (14) adapted to store two or more telephone numbers identifying the host telephone, and in that the handset means is in the form of a portable radio telephone (2) containing a second number assignment module (NAM) (7) capable of storing a number identifying the handset means, the portable telephone has means (8, 27) providing access to the second NAM (7) from outside the portable radio telephone, and the host telephone (1) is provided with means (4, 24, 3) for accessing the second NAM (7) whereby the host telephone becomes operable with the number identifying the portable radio telephone when the portable radio telephone is coupled to the host telephone.

3. A radio telephone system as claimed in claim 2, including means (15) capable of detecting the coupling of the portable radio telephone to the host telephone, wherein the host telephone comprises control circuitry (4) to which the first NAM (14) is coupled, and switching means (15) responsive to the detecting means which disconnect the first NAM from the control circuitry when the portable radio telephone (2) is coupled to the host telephone (1).

4. A radio telephone system as claimed in any of the preceding claims, wherein the host telephone (1) comprises re-programmable memory means (16) for storing information from the NAM (7) in the portable radio telephone, and means are provided for transferring information from said NAM (7) in the portable radio telephone to the memory means automatically when the portable radio telephone is connected to the host telephone.

5. A radio telephone system as claimed in claim 4 when dependant on claim 3, wherein the switching means (15) of the host telephone (1) couples the memory means (16) to the control circuitry (4) when the portable radio telephone (2) is coupled to the host telephone.

6. A radio telephone system as claimed in claim 4 or claim 5, wherein means are provided for erasing the information stored in the memory means (16) automatically when the portable radio telephone is disconnected from the host telephone.

7. A radio telephone system as claimed in any of the preceding claims, including means (12) capable of detecting the coupling of the hand portable telephone to the host telephone, the hand portable telephone comprising switching means (12) responsive to the detecting means which disable at least some of the R.F. circuits (13) of the hand portable telephone (2) when the hand portable telephone is coupled to the host telephone (1).

8. A radio telephone system as claimed in any of the preceding claims, wherein the portable radio telephone comprises memory means (20) for storing variable information, and the host telephone comprises corresponding memory means (21), and means are provided for transferring information from the memory means in the portable radio telephone to the corresponding memory means in the host telephone automatically when the portable radio telephone is coupled to the host telephone.

9. A host radio telephone (1) for use in the radio telephone system claimed in any of the preceding claims, characterized in that the host telephone is adapted to have removably coupled thereto via a datalink a portable radio telephone (2) containing a number assignment module (NAM) (7) adapted to store two or more telephone numbers identifying the portable radio telephone, and the host telephone has means (4, 24, 3) for accessing the NAM (7) in the portable radio telephone whereby the host telephone becomes operable with at least one of the telephone numbers identifying the portable radio telephone when the portable radio telephone is coupled to the host telephone.

10. A host radio telephone (1) for use in the radio telephone system claimed in any of the preceding claims, characterized in that the host telephone contains a number assignment module (NAM) (14) adapted to store two or more telephone numbers identifying the host telephone, the host telephone is adapted to have removably coupled thereto via a datalink a portable radio telephone (2) containing a number assignment module (NAM) (7) storing a number identifying the portable radio telephone, and the host telephone has means (4, 24, 3) for accessing the NAM (7) in the portable radio telephone whereby the host telephone becomes operable with the number identifying the portable radio telephone when the portable radio telephone is coupled to the host telephone.

11. A portable radio telephone (2) for use in the radio telephone system claimed in any of claims 1 to 8, characterized in that the portable radio telephone (2) is adapted to be removably coupled via a datalink to the host telephone (1), the portable radio telephone contains a number assignment module (NAM) (7) adapted to store at least two telephone numbers identifying the portable radio telephone, and the portable radio telephone is adapted to provide access to the NAM (7) contained therein from outside the portable radio telephone.

**Patentansprüche**

1. Funktelefonsystem, enthaltend eine Wirtsfunktelefoneinrichtungen (1), eine Hörereinrichtung (2) und Einrichtungen (9, 10, 11) zum Verbinden der Hörereinrichtung (2) und der Wirtsfunktelefoneinrichtung (1), wobei Informationen dazwischen übertragen werden können, dadurch gekennzeichnet, daß die Hörereinrichtung in Form eines tragbaren Funktelefons (2) vorliegt, das ein Nummernzuordnungsmodul (7) enthält, das dazu eingerichtet ist, zwei oder mehrere Telefonnummern zu speichern, die das tragbare Funkstelefon identifizieren, wobei das tragbare Funktelefon (2) Einrichtungen (8, 27) aufweist, die von außerhalb des Funktelefons Zugang zu dem Nummernzuordnungsmodul (7) haben, und wobei die Wirtsfunktelefoneinrichtung (1) mit Einrichtungen (4, 23, 3) für den Zugang des Nummernzuordnungsmoduls (7) im tragbaren Funktelefon (2) versehen ist, wobei die Wirtsfunktelefoneinrichtung (1) durch mindestens eine der Telefonnummern, die das tragbare Funktelefon identifizieren, wenn das tragbare Funktelefon mit der Wirsfunktelefoneinrichtung verbunden ist, betreibbar wird.

2. Funktelefonsystem enthaltend ein Wirtsfunktelefon (1), eine Hörereinrichtung (2), und Einrichtungen (9, 10, 11) zum Verbinden der Hörereinrichtung (2) mit dem Wirtsfunktelefon (1), wobei Informationen dazwischen ausgetauscht werden können, dadurch gekennzeichnet, daß die Wirtstelefoneinrichtung ein erstes Nummernzuordnungsmodul (14) aufweist, das dazu eingerichtet ist, zwei oder mehrere Telefonnummern zu speichern, die das Wirtstelefon identifizieren, und dadurch daß die Hörereinrichtung in Form eines tragbaren Funktelefons (2) vorliegt, das ein zweites Nummernzuordnungsmodul (7) aufweist, das in der Lage ist, eine zweite Nummer zu speichern, die die Hörereinrichtung identifiziert, wobei das tragbare Telefon Einrichtungen (8, 27) aufweist, die von außerhalb des tragbaren Funktelefons Zugang zu dem zweiten Nummernzuordnungsmodul (7) gewähren, und wobei das Wirtstelefon mit Einrichtungen (4, 24, 3) für den Zugang zum zweiten Nummernzuordnungsmodul (7) ausgestattet ist, wobei das Wirtstelefon durch die Nummer, die das tragbare Funktelefon identifiziert wenn das tragbare Funktelefon mit dem Wirtstelefon verbunden ist, betreibbar wird.

3. Funktelefonsystem nach Anspruch 2, das Einrichtungen (15) enthält, die in der Lage sind, die Verbindung des tragbaren Funktelefons mit dem Wirtstelefon zu ermitteln, wobei das Wirtstelefon Steuer- und Überwachungsleitungen (4) enthält, an die das erste Nummernzuordnungsmodul angeschlossen ist, und Schalteinrichtiungen (15) enthält, die auf die Ermittlungseinrichtung, die das erste Nummernzuordnungsmodul von der Steuerund Überwachungsleitung trennen, reagieren, wenn das tragbare Funktelefon (2) mit dem Wirtstelefon (1) verbunden ist.

4. Funktelefonsystem nach einem der vorausgehenden Ansprüche, wobei das Wirtstelefon (1) wieder-programmierbare Speichereinrichtungen (16) zum Speichern von Informationen vom Nummernzuordnungsmodul (7) im tragbaren Funktelefon enthält, und wobei Einrichtungen zum Übertragen von Informationen vom Nummernzuordnungsmodul (7) im tragbaren Funktelefon wenn das tragbare Funktelefon mit dem Wirtselefon verbunden ist vorgesehen sind.

5. Funktelefonsystem nach Anspruch 4, wenn dieser auf Anspruch 3 basiert, wobei die Schalteinrichtungen (15) des Wirtstelefons (1) die Speichereinrichtung (16) mit der Steuer- und Überwachungsleitung (4) verbindet, wenn das tragbare Funktelefon (2) mit dem Wirtstelefon verbunden ist.

6. Funktelefonsystem nach Anspruch 4 oder 5, wobei Einrichtungen zum automatischen Löschen der in der Speichereinrichtung (16) gespeicherten Informationen, wenn das tragbare Funktelefon von dem Wirtstelefon getrennt wird, vorgesehen sind.

7. Funktelefonsystem nach einem der vorausgehenden Ansprüche, das Einrichtungen (12) beinhaltet, die in der Lage sind, die Verbindung des tragbaren Telefons zum Wirtstelefon zu ermitteln, wobei das tragbare Telefon Schalteinrichtungen (12) enthält, die auf die Ermittlungseinrichtung, die wenigstens einige der HF-Schaltungen (13) des tragbaren Telefons (2) abschaltet, wenn das tragbare Telefon mit dem Wirtstelefon (1) verbunden ist, reagieren.

8. Funktelefonsystem nach einem der vorausgehenden Ansprüche, wobei das tragbare Funktelefon Speichereinrichtungen (2) zum Speichern verschiedener Informationen enthält und wobei das Wirtstelefon entsprechende Speichereinrichtungen (21) enthält, und wobei Einrichtungen zum automatischen Übertragen der Informationen von der Speichereinrichtung im tragbaren Funktelefon zur entsprechenden Speichereinrichtung im Wirtstelefon wenn das tragbare Funktelefon mit dem Wirtstelefon verbunden ist, vorgesehen ist.

9. Wirtsfunktelefon (1) zur Verwendung im Funktelefonsystem nach einem der vorausgehenden Ansprüche, dadurch gekennezeichnet, daß das Wirtstelefon dazu angepaßt ist, über einen Datenübertragungsabschnitt ein tragbares Funktelefon (2) lösbar daran anzuschließen, das ein Nummernzuordnungsmodul (7) hat, das dazu eingerichtet ist, zwei oder mehrere Telefonnummern, die das tragbare Funktelefon identifizieren, zu speichern, und wobei das Wirtstelefon Einrichtungen (4, 24, 3) für den Zugang zum Nummernzuordnungsmodul (7) im tragbaren Funktelefon aufweist, wobei das Wirtstelefon durch mindestens eine der Telefonnummern, die das tragbare Funktelefon identifizieren, betriebsbereit ist, wenn das tragbare Funktelefon mit dem Wirtstelefon verbunden wird.

10. Wirtsfunktelefon (1) zur Verwendung im Funktelefonsystem nach einem der vorausgehenden Ansprüche, dadurch gekennzeichnet, daß das Wirtstelefon ein Nummernzuordnungsmodul (14) enthält, das dazu eingerichtet ist, zwei oder mehrere Telefonnummern, die das Wirtstelefon identifizieren zu speichern, wobei das Wirtstelefon dazu eingereichtet ist, über einen Datenübertragungsabschnitt ein tragbares Funktelefon (2) lösbar daran anzuschließen, das ein Nummernzuordnungsmodul (7) hat, das eine Nummer speichert, die das tragbare Funktelefon identifiziert, und wobei das Wirtstelefon Einrichtungen (4, 24, 3) für den Zugang zum Nummernzuordnungsmodul (7) im tragbaren Funktelefon aufweist, wobei das Wirtstelefon durch die Nummer, die das tragbare Funktelefon identifiziert, betriebsbereit wird, wenn das tragbare Funktelefon mit dem Wirtstelefon verbunden wird.

11. Tragbares Funktelefon (2) zur Verwendung im Funktelefonsystem nach einem der Ansprüche 1 bis 8, dadurch gekennzeichnet, daß das tragbare Funktelefon (2) dazu eingereichtet ist, über einen Datenübertragungsabschnitt mit dem Wirstelefon (1) verbunden zu werden, wobei das tragbare Funktelefon ein Nummernzuordnungsmodul (7) enthält, das dazu eingerichtet ist, mindestens zwei Telefonnummern, die das tragbare Funtelefon identifizieren zu speichern, und wobei das tragbare Funktelefon dazu eingerichtet ist, Zugang zum Nummernzuordnungsmodul (7), das darin von außerhalb des tragbaren Funktelefons enthalten ist, zu schaffen.

## Revendications

1. Système radio-téléphonique comprenant un moyen radio-téléphonique hôte (1), un moyen à combiné (2), et des moyens (9, 10, 11) pour interconnecter le moyen à combiné (2) et le moyen radio-téléphonique hôte (1), afin que des informations puissent être transférées entre ceux-ci, caractérisé en ce que le moyen à combiné est sous forme d'un radio-téléphone portatif (2) contenant un module d'affectation de numéro (MAN) (7) adapté à stocker deux ou plusieurs numéros de téléphone identifiant le radio-téléphone portatif, en ce que le radio-téléphone portatif (2) comporte des moyens (8, 27) assurant un accès audit MAN (7) de l'extérieur du radio-téléphone portatif, et en ce que le moyen radio-téléphonique hôte (1) est muni de moyens (4, 24, 3) pour accéder audit MAN (7) du radio-téléphone portatif (2), le moyen radio-téléphonique hôte (1) devenant alors utilisable avec au moins l'un des numéros de téléphone identifiant le radio-téléphone portatif, lorsque le radio-téléphone portatif est relié au moyen radio-téléphonique hôte.

2. Système radio-téléphonique comprenant un radio-téléphone hôte (1), un moyen à combiné (2), et des moyens (9, 10, 11) pour interconnecter le moyen à combiné (2) et le radio-téléphone hôte (1), de façon à ce que des informations puissent être échangées entre ceux-ci, caractérisé en ce que le moyen téléphonique hôte comprend un premier module d'affectation de numéro (MAN) (14) adapté à stocker deux ou plusieurs numéros de téléphone identifiant le téléphone hôte, et en ce que le moyen à combiné est sous la forme d'un radio-téléphone portatif (2) contenant un second module d'affectation de numéro (MAN) (7) capable de stocker un numéro identifiant le moyen à combiné, en ce que le téléphone portatif comporte des moyens (8, 27) assurant un accès au second MAN (7) de l'extérieur du radio-téléphone portatif, et en ce que le téléphone hôte (1) est muni de moyens (4, 24, 3) pour accéder au second MAN (7) de façon à ce que le téléphone hôte devienne utilisable avec le numéro identifiant le radio-téléphone portatif lorsque le radio-téléphone portatif est relié au téléphone hôte.

3. Système radio-téléphonique selon la revendication 2, comportant un moyen (15) capable de détecter le raccordement du radio-téléphone portatif au téléphone hôte, dans lequel le téléphone hôte comprend des circuits de commande (4) auxquels le premier MAN (14) est raccordé, et des moyens de commutation (15) répondant aux moyens de détection pour déconnecter le premier MAN des circuits de commande lorsque le radio-téléphone portatif (2) est relié au téléphone hôte (1).

4. Système radio-téléphonique selon l'une quelconque des revendications précédentes, dans lequel le téléphone hôte (1) comprend un moyen à mémoire reprogrammable (16) pour stocker des informations provenant du MAN (7) du radio-téléphone portatif, et en ce que des moyens sont prévus pour transférer automatiquement des informations dudit MAN (7) du radio-téléphone portatif, au moyen à mémoire lorsque le radio-téléphone portatif est connecté au téléphone hôte.

5. Système radio-téléphonique selon la revendication 4, lorsqu'elle dépend de la revendication 3, dans lequel le moyen de commutation (15) du téléphone hôte (1), relie le moyen à mémoire (16) aux circuits de commande (4) lorsque le radio-téléphone portatif (2) est relié au téléphone hôte.

6. Système radio-téléphonique selon la revendication 4 ou la revendication 5, dans lequel des moyens sont prévus pour effacer automatiquement les informations stockées dans le moyen à mémoire (16) lorsque le radio-téléphone portatif est déconnecté du téléphone hôte.

7. Système radio-téléphonique selon l'une quelconque des revendications précédentes, comportant un moyen (12) capable de détecter le raccordement du téléphone portatif au téléphone hôte, le téléphone portatif comprenant un moyen de commutation (12) répondant au moyen de détection pour inhiber au moins certains des circuits RF (13) du téléphone portatif (2) lorsque le téléphone portatif est relié au téléphone hôte (1).

8. Système radio-téléphonique selon l'une quelconque des revendications précédentes, dans lequel le radio-téléphone portatif comprend un moyen à mémoire (20) pour stocker des informations variables, dans lequel le téléphone hôte comprend un moyen à mémoire correspondant (21), et dans lequel des moyens sont prévus pour transférer automatiquement des informations du moyen à mémoire du radio-téléphone portatif au moyen à mémoire correspondant dans le téléphone hôte, lorsque le radio-téléphone portatif est relié au téléphone hôte.

9. Radio-téléphone hôte (1) pour utilisation dans le système radio-téléphonique revendiqué dans l'une quelconque des revendications précédentes, caractérisé en ce que le téléphone hôte est adapté à être connecté de façon amovible par l'intermédiaire d'une liaison de données, à un radio-téléphone portatif (2) contenant un module d'affectation de numéro (MAN) (7) adapté à ce qu'il y ait deux ou plusieurs numéros de téléphone identifiant le radio-téléphone portatif, et en ce que le téléphone hôte comporte des moyens (4, 24, 3) pour accéder au MAN (7) du radio-téléphone portatif, ce qui permet au téléphone hôte de devenir utilisable avec au moins l'un des numéros de téléphone identifiant le radio-téléphone portatif lorsque le radio-téléphone portatif est relié au téléphone hôte.

10. Radio-téléphone hôte (1) pour utilisation dans le système radio-téléphonique revendiqué dans l'une quelconque des revendications précédentes, caractérisé en ce que le téléphone hôte contient un module d'affectation de numéro (MAN) (14) adapté à ce qu'il y ait deux ou plusieurs numéros de téléphone identifiant le téléphone hôte, en ce que le téléphone hôte est adapté à être relié de façon amovible par l'intermédiaire d'une liaison de données, à un radio-téléphone portatif (2) contenant un module d'affectation de numéro (MAN) (7) stockant un numéro identifiant le radio-téléphone portatif, et en ce que le téléphone hôte comporte des moyens (4, 24, 3) pour accéder au MAN (7) du radio-téléphone portatif, de façon à ce que le téléphone hôte devienne utilisable avec le numéro identifiant le radio-téléphone portatif lorsque le radio-téléphone portatif est relié au téléphone hôte.

11. Radio-téléphone portatif (2) pour utilisation dans le système radio-téléphonique revendiqué dans l'une quelconque des revendications 1 à 8, caractérisé en ce que le radio-téléphone portatif (2) est adapté à être relié de façon amovible par une liaison de données au téléphone hôte (1), en ce que le radio-téléphone portatif contient un module d'affectation de numéro (MAN) (7) adapté à stocker au moins deux numéros de téléphone identifiant le radio-téléphone portatif, et en ce que le radio-téléphone portatif est adapté à assurer l'accès au MAN (7) contenu dans celui-ci de l'extérieur du radio-téléphone portatif.

*Fig.1.*

*Fig.2.*

## Fig.3.

## Fig.4.